(19)

**Europäisches Patentamt**
**European Patent Office**
**Office européen des brevets**

(11) **EP 2 465 606 A1**

(12) **EUROPÄISCHE PATENTANMELDUNG**

(43) Veröffentlichungstag:
20.06.2012 Patentblatt 2012/25

(51) Int Cl.:
*B01J 29/85* (2006.01)   *B01J 23/72* (2006.01)
*B01D 53/94* (2006.01)

(21) Anmeldenummer: 10015703.1

(22) Anmeldetag: 16.12.2010

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(71) Anmelder: **UMICORE AG & CO. KG**
**63457 Hanau-Wolfgang (DE)**

(72) Erfinder:
• **Seyler, Michael**
**63517 Rodenbach (DE)**
• **Söger, Nicola**
**61130 Nidderau (DE)**
• **Adelmann, Katja**
**64297 Darmstadt (DE)**
• **Pauli, Thomas R.**
**61440 Oberursel (DE)**
• **Jeske, Gerald**
**63543 Neuberg (DE)**

(54) **Zeolith-basierter Katalysator mit verbesserter katalytischer Aktivität zur Reduktion von Stickoxiden**

(57) Es wird ein mit Kupfer promotierter zeolithischer Katalysators auf der Basis von Zeolithen oder zeolith-ähnlichen Verbindungen und seine Herstellung beschrieben, der eine verbesserte katalytische Aktivität in der Reduktion von Stickoxiden mit Ammoniak oder zu Ammoniak zersetzlichen Verbindungen als Reduktionsmittel aufweist.

EP 2 465 606 A1

**Beschreibung**

Die Erfindung betrifft ein Verfahren zur Reduktion von Stickoxiden, insbesondere unter Einsatz von Ammoniak oder zu Ammoniak zersetzlichen Verbindungen als Reduktionsmittel, über einem Katalysators auf der Basis von Zeolithen oder zeolithähnlichen Verbindungen, der eine verbesserte katalytische Aktivität aufweist, sowie Methoden zur Herstellung des Katalysators.

Das Abgas von Dieselmotoren enthält neben den aus einer unvollständigen Verbrennung des Kraftstoffs resultierenden Schadgasen Kohlenmonoxid (CO) und Kohlenwasserstoffe (HC) Rußpartikel (PM) und Stickoxide ($NO_x$). Außerdem enthält das Abgas von Dieselmotoren bis zu 15 Vol.-% Sauerstoff. Es ist bekannt, daß die oxidierbaren Schadgase CO und HC durch Überleiten über einen geeigneten Oxidationskatalysator in unbedenkliches Kohlendioxid ($CO_2$) umgewandelt und Partikel durch Durchleiten des Abgases durch ein geeignetes Rußpartikelfilter entfernt werden können. Auch Technologien zur Entfernung von Stickoxiden aus Abgasen in Gegenwart von Sauerstoff sind im Stand der Technik gut bekannt. Eines dieser "Entstickungsverfahren" ist das sogenannte SCR-Verfahren (SCR = Selective Catalytic Reduction), d.h. die selektive katalytische Reduktion der Stickoxide mit dem Reduktionsmittel Ammoniak an einem dafür geeigneten Katalysator, dem SCR-Katalysator. Dabei kann Ammoniak als solches oder in Form einer unter Umgebungsbedingungen zu Ammoniak zersetzlichen Vorläuferverbindung dem Abgasstrom zugegeben werden, wobei unter "Umgebungsbedingungen" die Umgebung der zu Ammoniak zersetzlichen Verbindung im Abgasstrom vor SCR-Katalysator verstanden wird. Zur Durchführung des SCR-Verfahrens sind eine Quelle zur Bereitstellung des Reduktionsmittels, eine Einspritzvorrichtung zur bedarfsgerechten Eindosierung des Reduktionsmittels in das Abgas und ein im Strömungsweg des Abgases angeordneter SCR-Katalysator notwendig. Die Gesamtheit aus Reduktionsmittelquelle, SCR-Katalysator und anströmseitig zum SCR-Katalysator angeordneter Einspritzvorrichtung wird auch als SCR-System bezeichnet.

Zur Reinigung der Dieselabgase in Kraftfahrzeugen wird das SCR-System zumeist in Kombination mit anderen Abgasreinigungsaggregaten wie Oxidationskatalysatoren und Dieselpartikelfilter eingesetzt. Daraus ergeben sich viele verschiedene Möglichkeiten der Abgassystemgestaltung. Je nach Einbauposition des SCR-Systems und insbesondere je nach Anordnung des SCR-Katalysators im Strömungsweg des Abgases werden unterschiedliche Anforderungen an dessen Leistungsfähigkeit und Alterungsstabilität gestellt. Folgerichtig ist im Stand der Technik eine Vielzahl von SCR-Katalysatoren beschrieben worden, die sich zur Verminderung des Stickoxid-Gehalts im Abgas von Dieselmotoren eignen und die zumeist entsprechend der spezifischen Anforderungen der jeweiligen Abgassystemkonfiguration optimiert sind.

EP 0 234 441 offenbart einen Katalysator für die selektive katalytische Reduktion von $NO_x$ zu Stickstoff in Anwesenheit von Ammoniak, der zu 5 bis 50 Gew.-% aus Zirkonoxid-Ausgangsmaterial mit einer spezifischen Oberfläche von zumindest 10 $m^2$/g, zu 50 bis 90 % aus einem oder mehreren Zeolithen in der Wasserstoff- oder Ammoniumform und zu 0 bis 30 % aus Bindemittel besteht. Als Zeolithe kommt bevorzugt Klinoptilolith gegebenenfalls in Abmischung mit Chabazit zum Einsatz. Desweiteren kann der Katalysator Vanadiumoxid und/oder Kupferoxid als Promotoren enthalten.

US 4,874,590 offenbart ein Verfahren zur katalytischen Verminderung von Stickoxiden neben Schwefeloxiden aus Gasströmen durch Überleiten des Gasstroms mit Ammoniak über ein mikroporöses, nicht-zeolithisches Molsieb. Dieses Molsieb wird bevorzugt ausgewählt aus der Gruppe der SAPOs, ELAPSOs, AlPOs, MeAlPOs, FeAPOs, TAPOs, ELAPOs und MeAPSOs. In das Molsieb können Metallionen ausgewählt aus Cu, Co, V, Cr, W, Ni, Pd, Pt, Mn, Mo, Rh, Mg, Al und Fe eingetauscht sein, wobei besonders bevorzugt Cu als Austauschion verwendet wird. Gegebenenfalls liegt die nicht-zeolithische Molsiebzusammensetzung geträgert in einer anorganischen, oxidischen Matrix vor, wobei üblicherweise amorphe, katalytisch aktive, anorganische Oxide eingesetzt werden wie Silica/Alumina, Tonerde, $SiO_2$ $Al_2O_3$, Mischoxide von $SiO_2$ mit $Al_2O_3$, $ZrO_2$ MgO, Thoriumoxid, Berylliumoxid, Si-Al-Th-Mischoxide, Si-Al-Zr-Mischoxide, Al-B-Mischoxide, Aluminiumtitanate und ähnliche.

WO 2005/088091 offenbart ein Verfahren zur Reduktion von Stickoxiden in Dieselabgasen unter Verwendung von Kraftstoff (Kohlenwasserstoffe) anstelle von Ammoniak oder einer zu Ammoniak zersetzlichen Verbindung als Reduktionsmittel. In diesem Verfahren wird ein Katalysator eingesetzt, der ein $NO_x$-absorbierendes Material und ein $NO_x$-reduzierendes Material enthält. Beide Materialien sind ausgewählt aus der Gruppe enthaltend natürliche, synthetische, ionenaustauschende, nicht-ionenaustauschende, modifizierte, nichtmodifizierte, "pillared", nicht-"pillared", Tonmineralien, Sepiolite, Attapulgite, natürliche, synthetische, ionenaustauschende, nicht-ionenaustauschende, modifizierte, nichtmodifizierte, Zeolithe, Cu, Ba, K, Sr und Ag-beladene, Al, Si und Ti-"gepillarte" Montmorillonite, Hectorite gedopt mit Fe, In, Mn, La, Ce, oder Cu sowie Mischungen daraus, Cu, Fe, Ag, Ce-beladene Klinoptilolite sowie Mischungen davon. In bevorzugten Ausführungsformen werden Abmischungen von Zeolithen mit Tonmineralien und Kupfer als katalytisch aktive Komponente verwendet.

US 7,220,692 offenbart ebenfalls einen Katalysator, der für die Reduktion von Stickoxiden in mageren Verbrennungsabgasen unter Verwendung von Kohlenwasserstoffen als Reduktionsmittels geeignet ist. Dieser Katalysator ist bifunktional und kombiniert aktive, metallausgetauschte Molekularsiebe mit einer separaten stabilisierenden Metalloxidphase, die aus einer Sol-Vorläuferverbindung als Beschichtung über dem Molekularsiebpartikel erzeugt wird und eine verbesserte hydrothermale Stabilität bei gleichzeitigem Erhalt der Tieftemperatur-$NO_x$-Reduktionsaktivität bewirkt. Als metallausgetauschte Molekularsiebe werden vorzugsweise solche eingesetzt, deren Porengrößen mindestens 4 Ångström betragen (Zeolith Y, Zeolith β, Mordenit, Ferrierit, ZSM-5, ZSM-12) und die als Promotoren eines oder mehrere der Übergangsmetalle Cu, Co, Fe, Ag und Mo enthalten.

Die aufgeführten Dokumente zeigen, daß es im Stand der Technik bekannt ist, mit Kupfer ausgetauschte Zeolithe und zeolithähnliche Verbindungen als SCR-Katalysatoren zu verwenden. Insbesondere die Verwendung von mit Kupfer ausgetauschten, kleinporigen Zeolithen wie Chabazit (CHA) oder entsprechenden zeolithähnlichen Verbindungen wie Siliziumaluminiumphosphat in Chabazit-Struktur (SAPO-34) stehen in jüngster Zeit im Fokus der SCR-Katalysatorentwicklung, denn diese Verbindungen zeichnen sich durch eine gute $NO_x$-Konvertierungsaktivität bei Temperaturen bis 300°C bei zugleich hervorragender Resistenz gegen - zumeist reversible - Blockaden durch im Abgas ebenfalls enthaltene Kohlenwasserstoffverbindungen (HC) aus.

Der Erfindung lag die Aufgabe zugrunde, einen in seiner katalytischen Aktivität verbesserten SCR-Katalysator zur Verfügung zu stellen, ohne die genannten Vorteile der mit Kupfer ausgetauschten Chabazit- oder SAPO-34-Katalysatoren einzubüßen.

Diese Aufgabe wird gelöst durch ein Verfahren zur Verbesserung der katalytischen Aktivität eines mit Kupfer promotierten zeolithischen Katalysators umfassend die Behandlung eines Zeolithen und/oder einer zeolithähnlichen Verbindung mit einer Kupfersalzlösung und Kalzination des Zeolithen und/oder der zeolithähnlichen Verbindung unter oxidierenden Bedingungen, um den mit Kupfer promotierten zeolithischen Katalysator zu bilden, welcher in der temperaturprogrammierten Reduktion (TPR) mit Wasserstoff bei einer Heizrate von 10 K/min und einem Wasserstoffanteil im Testgas von 5 Vol.-% im Temperaturbereich von 230°C bis 240°C ein Signal aufweist, wobei die Einwaage in der TPR so zu bemessen ist, daß die zu untersuchende Probe 3 bis 8 Milligramm Kupfer berechnet als Metall enthält. Die Aufgabe wird weiterhin gelöst durch einen entsprechenden, mit Kupfer promotierten zeolithischen Katalysator und ein Verfahren zur Reduktion von Stickoxiden in Abgasströmen umfassend das Inkontaktbringen des Abgasstromes mit einem solchen mit Kupfer promotierten zeolithischen Katalysator.

Vor der detaillierten Beschreibung der Erfindung werden im folgenden einige Begriffe und Verfahren genauer erläutert:

Unter "zeolithischer Katalysator" wird im Rahmen dieser Schrift eine heterogenkatalytisch aktive Verbindung verstanden, die mehrheitlich aus einem oder mehreren Zeolithen und/oder einer oder mehrerer zeolithähnlicher Verbindung besteht. Unter einem "mit Kupfer promotiertem zeolithischen Katalysator" wird eine heterogenkatalytisch aktive Verbindung verstanden, die mehrheitlich aus einem oder mehreren Zeolithen und/oder einer oder mehrerer zeolithähnlicher Verbindungen besteht und Kupferatome als heterogenkatalytisch aktive Zentren enthält. Das Kupfer ist vorzugsweise mindestens anteilig in das Innere der Käfigstruktur der Zeolithe bzw. der zeolithähnlichen Verbindungen eingebracht. Das Einbringen des Kupfers in die Käfigstruktur der Zeolithe bzw. der zeolithähnlichen Verbindungen kann durch Fest- oder Flüssigionenaustausch oder durch andere dem Fachmann bekannte Methoden wie beispielsweise Sublimationsverfahren oder Chemische Gasphasenabscheidung (Chemical Vapour Deposition CVD) erfolgt sein.

Unter dem Begriff "zeolithähnliche Verbindung" wird im Rahmen dieser Schrift eine Verbindung verstanden, die denselben Strukturtyp aufweist, wie eine natürlich vorkommende oder eine synthetisch hergestellte Zeolithverbindung, die sich von solchen jedoch dadurch unterscheidet, daß die entsprechende Käfigstruktur nicht ausschließlich aus Aluminium- und Siliziumgerüstatomen aufgebaut ist. In solchen Verbindungen werden die Aluminium- und/oder Siliziumgerüstatome anteilig durch andere drei-, vier- und/oder fünfwertige Ionen wie beispielsweise $P^{3+}$, $P^{5+}$, $Ga^{3+}$, $In^{3+}$, $As^{3+}$, $Cr^{3+}$, $Fe^{3+}$, $V^{3+}$, $Ge^{4+}$, $Ti^{4+}$, $Zr^{3+}$ ersetzt. In der Praxis am häufigsten zur Anwendung kommt der Ersatz von Aluminium- und/oder Siliziumgerüstatomen durch Phosphoratome, beispielsweise in den Siliziumaluminiumphosphaten oder in den Aluminiumphosphaten, die in Zeolithstrukturtypen kristallisieren. Prominente Beispiele sind das in Chabazitstruktur kristallisierende Siliziumaluminiumphosphat SAPO-34 und das in Chabazitstruktur kristallisierende Aluminiumphosphat ALPO-34.

Unter dem Begriff der temperaturprogrammierten Reduktion (TPR) wird ein Verfahren zur Untersuchung der Reduzierbarkeit bzw. des themischen Verhaltens von Feststoffen, wie beispielsweise katalytisch aktiven Materialien, gegenüber Wasserstoff in Abhängigkeit von der Temperatur verstanden. Der zu untersuchende Feststoff oder Katalysator wird zur Entfernung von anhaftender Feuchtigkeit zunächst im Trockenschrank bei 110°C getrocknet und dann warm in einem Probengefäß eingewogen, das beispielsweise ein einfaches U-Rohr sein kann. Dieses Probengefäß wird in einem Ofen positioniert, der mit einer Temperaturregelung ausgestattet ist. Zusätzlich zeichnet ein Thermoelement die Temperatur in der Feststoffschüttung auf. Das Probengefäß kann zunächst bei leicht erhöhter Temperatur mit einem Inertgas (Stickstoff, Argon) durchströmt werden, um die vorhandene Luft zu entfernen. Zum reinen Inertgasstrom wird nach einigen Minuten mit Hilfe von Durchflussreglern Wasserstoff zudosiert (beispielsweise 10 Volumenprozent Wasserstoff in Stickstoff). Bei den Untersuchungen, die im Rahmen dieser Schrift beschrieben werden, wurde das Probengefäß vor Beginn der Messung bei Raumtemperatur für die Dauer von fünf Minuten mit Meßgas (5 Vol.-% Wasserstoff in Argon) gespült. Dann wird die Probe im Ofen definiert aufgeheizt. Die Heizraten liegen meist zwischen 1 K/min und 20 K/min. Der hinter dem Probengefäß noch vorhandene Wasserstoffgehalt wird durch geeignete Detektoren (Wärmeleitfähigkeitsdetektor, Massenspektrometer) gemessen und aufgezeichnet. Wurde Wasserstoff verbraucht, so liegt die im durchbrechenden Gas gemessene Wasserstoffkonzentration unter dem Startwert von beispielsweise 5 Vol.-% Wasserstoff, und es fand bei der gerade erreichten Temperatur ein Reduktionsprozess statt.

Zur Auswertung der Ergebnisse einer TPR-Untersuchung wird der Wasserstoffverbrauch als Funktion der Temperatur dargestellt. Aus dem erhaltenen Diagramm mit möglicherweise mehreren Peaks lassen sich Informationen über die Anzahl der Reduktionsprozesse ableiten. Eine sorgfältig durchgeführte Messung lässt außerdem eine quantitative Bestimmung des Wasserstoffverbrauches und somit (bei Kenntnis der eingewogenen Substanzmenge) eine Bestimmung des Reduktionsgrades zu. Auch wenn die Messung nicht quantifiziert werden kann oder die erhaltenen Peaks nicht eindeutig den möglichen Reduktionsprozessen zugeordnet werden können, lassen sich mit Hilfe der TPR mehrere Proben bezüglich ihres thermischen Verhaltens vergleichen. Insofern ist das Ergebnis der TPR hinsichtlich der Lage der Peaks charakteristisch für den untersuchten Stoff und reproduzierbar, wenn die Heizrate [in K/min], die eingewogene Substanzmenge [in Gramm] und der Wasserstoffanteil im Testgas [in Vol.-%] konstant gehalten werden.

Eine ständige Anforderung an neu entwickelte SCR-Katalysatoren ist die Verbesserung ihrer katalytischen Aktivität. Die Erfinder haben nun überraschend festgestellt, daß die katalytische Aktivität der mit Kupfer promotierten zeolithischen Katalysatoren durch eine thermische Vorbehandlung unter oxidierenden Bedingungen, beispielsweise durch eine Kalzination an Luft, gezielt beeinflußbar ist. Unter geeigneten Kalzinationsbedingungen bilden sich offenbar besonders stark reduktionskatalytisch aktive Zentren aus, die an einem TPR-Peak im Temperaturbereich zwischen 230°C und 240°C zu erkennen sind, wenn die entsprechende TPR-Messung bei einer Heizrate von 10 K/min, einem Testgas mit einem Wasserstoffanteil von 5 Vol.-% und mit einer Probenmenge durchgeführt wird, die so bemessen ist, daß sie 3 bis 8 Milligramm Kupfer berechnet als Metall enthält.

Die Behandlung erfolgt nach dem Eintausch der Kupferionen in den Zeolithen bzw. die zeolithähnliche Verbindung, die geeigneterweise durch Behandlung des Zeolithen bzw. der zeolithähnlichen Verbindung mit einer Kupfersalzlösung vorgenommen wird. Dabei wird als Kupfersalzlösung vorzugsweise eine Verbindung ausgewählt aus Kupfer(II)-sulfat, Kupfer(II)-nitrat, Kupfer(II)-acetat und Kupfer(II)-acetylacetonat in Wasser und/oder einem polaren Lösungsmittel ausgewählt aus der Gruppe bestehend aus Acetylaceton, kurzkettige Alkohole mit bis zu drei Kohlenstoffatomen, Acetonitril, Aceton, Dimethylsulfoxid (DMSO), Methylethylketon oder Mischungen davon verwendet. Besonders bevorzugt ist eine Lösung von Kupfer(II)-sulfat und/oder Kupfer(II)-nitrat und/oder Kupfer(II)-acetat in Wasser.

Konzentration und Menge der für den Flüssigionenaustausch verwendeten Kupfersalzlösung werden vorzugsweise so gewählt, daß die Kupferverbindung im resultierenden mit Kupfer ausgetauschten Zeolithen bzw. in der resultierenden mit Kupfer ausgetauschten zeolithähnlichen Verbindung in Mengen von zwischen 0,1 bis 20 Gew.-%, berechnet als Kupfer und bezogen auf die Gesamtmenge aus Kupfer und Zeolith bzw. zeolithähnlicher Verbindung, vorliegt.

Die thermische Behandlung unter oxidierenden Bedingungen erfolgt vorzugsweise durch Kalzination in Luft im Temperaturbereich zwischen 600°C und 900°C, besonders bevorzugt im Temperaturbereich zwischen 600°C und 800°C und ganz besonders bevorzugt im Temperaturbereich zwischen 630°C und 790°C.

Wird zur Herstellung des mit Kupfer promotierten, zeolithischen Katalysators ein Siliziumaluminiumphosphat mit Chabazitstruktur (SAPO-34) verwendet, so ist die Ausbildung der offenbar besonders stark reduktionskatalytisch aktiven Zentren an einem TPR-Peak bei 240°C zu erkennen, wenn die temperaturprogrammierte Reduktion bei einer Heizrate von 10 K/min, einem Wasserstoffanteil im Testgas von 5 Vol.-% und mit einer Probeneinwaage durchgeführt wird, die so bemessen ist, daß sie 3 bis 8 Milligramm Kupfer berechnet als Metall enthält.

Wird zur Herstellung des mit Kupfer promotierten, zeolithischen Katalysators ein Chabazit (CHA) verwendet, so ist die Ausbildung der offenbar besonders stark reduktionskatalytisch aktiven Zentren an einem TPR-Peak bei 230°C zu erkennen, wenn die temperaturprogrammierte Reduktion bei einer Heizrate von 10 K/min, einem Wasserstoffanteil im Testgas von 5 Vol.-% und mit einer Probeneinwaage durchgeführt wird, die so bemessen ist, daß sie 3 bis 8 Milligramm Kupfer berechnet als Metall enthält.

Die Erfindung wird nachfolgend anhand von Beispielen und Figuren näher erläutert. Es zeigen:

**Figur 1**: BET-Oberflächen erfindungsgemäßer, mit Kupfer promotierter zeolithischer Katalysatoren (I/640; I/780; I/850) und einer nicht nachkalzinierten Vergleichsprobe (I/---);

**Figur 2**: mittlerer $NO_x$-Umsatz über einer nicht nachkalzinierten Vergleichsprobe (I/---) und über erfindungsgemäßen, mit Kupfer promotierten zeolithischen Katalysatoren (I/640; I/780; I/850);

**Figur 3**: TPR-Diagramme (von oben nach unten) einer nicht nachkalzinierten Vergleichsprobe (I/---) und von erfindungsgemäßen, mit Kupfer promotierten zeolithischen Katalysatoren (I/640; I/780; I/850);

**Figur 4**: BET-Oberflächen erfindungsgemäßer, mit Kupfer promotierter zeolithischer Katalysatoren (II/640; II/780; II/850) und einer nicht nachkalzinierten Vergleichsprobe (II/---);

**Figur 5**: mittlerer NO$_x$-Umsatz über einer nicht nachkalzinierten Vergleichsprobe (II/---) und über erfindungsgemäßen, mit Kupfer promotierten zeolithischen Katalysatoren (II/640; II/780; II/850);

**Figur 6**: TPR-Diagramme (von oben nach unten) von erfindungsgemäßen, mit Kupfer promotierten zeolithischen Katalysatoren (II/640; II/780; II/850);

**Figur 7**: mittlerer NO$_x$-Umsatz über einem nicht nachkalzinierten kommerziellen Vergleichskatalysator (II/---) und über nachkalzinierten, erfindungsgemäßen Ausführungsformen (III/640; III/780; III/850);

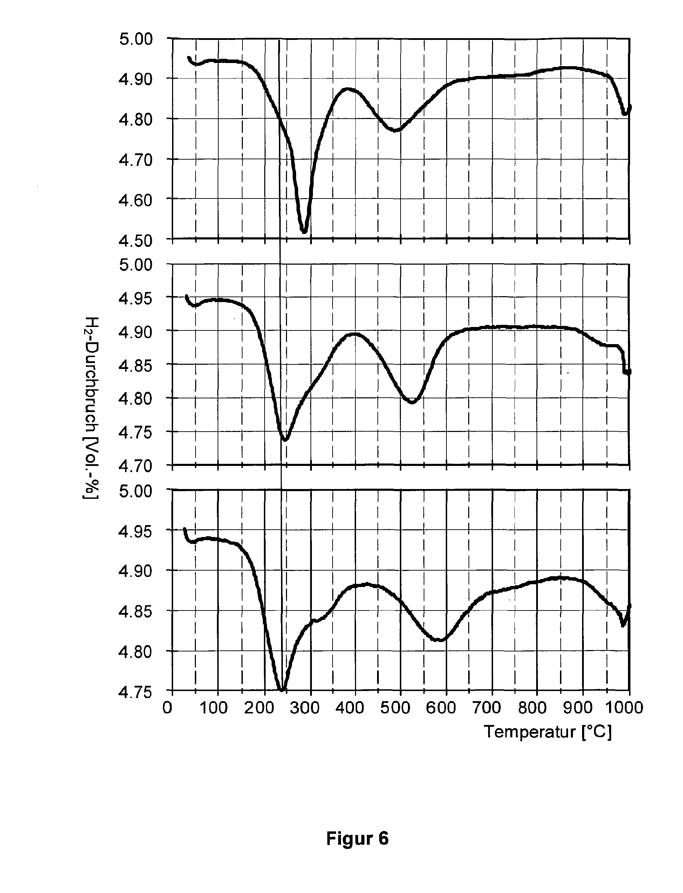

**Figur 6**: TPR-Diagramm eines mit Kupfer promotierten, zeolithischen Katalysators, zu dessen Herstellung ein Chabazit (CHA) verwendet wurde.

Der Einfluß der Kalzinationsbedingungen auf die katalytische Aktivität der resultierenden mit Kupfer promotierten zeolithischen Katalysatoren und die Ausbildung der offenbar besonders stark reduktionskatalytisch aktive Zentren wurde in einer Studie untersucht, die in den nachstehenden Ausführungsbeispielen beschrieben wird. Hierzu wurden in den Ausführungsbeispielen 1 und 2 verschiedene Proben von mit Kupfer promotierten zeolithischen Katalysatoren in Pulverform hergestellt, die unter verschiedenen Bedingungen oxidativ behandelt wurden. Die Herstellung dieser Proben ist nachstehend ausführlich beschrieben.

Eine Teilmenge der in Pulverform erhaltenen Proben aus den Ausführungbeispielen 1 und 2 wurde zum einen auf ihr Verhalten in der temperaturprogrammierten Reduktion mit Wasserstoff untersucht. An einer weiteren Teilmenge der Proben wurde die BET-Oberfläche der Pulver bestimmt. Die entsprechenden Meßbedingungen sind nachstehend angegeben.

Eine dritte Teilmenge der Proben aus den Ausführungsbeispielen 1 und 2 wurde zur Herstellung eines Trägerkatalysators in Wasser suspendiert und mit Silica-Sol als Binder versetzt, wobei die Menge des zugegebenen Silica-Sols so berechnet wurde, daß der resultierende Katalysator ca. 10 bis 15 Gew.-% daraus resultierendes SiO$_2$ bezogen auf die Gesamtmenge der katalytisch aktiven Beschichtung, enthielt. Die so erhaltene Suspension wurde vermahlen und zur Beschichtung eines zylindrischen, keramischen Durchflußwabenkörpers mit einem Durchmesser von 92,2 Millimetern und einer Länge von 76,2 Millimetern verwendet, wobei der Wabenkörper 62 Zellen pro Quadratzentimeter mit einer Zellwandstärke von 0,165 Millimetern aufwies. Der beschichtete Wabenkörper wurde getrocknet und bei 350°C für die Dauer von 2 Stunden getempert.

Den in dieser Weise hergestellten Katalysatoren wurden zur Untersuchung ihrer katalytischen Aktivität Bohrkerne entnommen. Diese Prüflinge hatten einen Durchmesser von 25,4 mm und eine Länge von 76,2 mm. Die Aktivität der Katalysatoren wurde in einer Labormodellgasanlage in einem dynamischen Aktivitätstest untersucht. Die Testbedingungen werden nachstehend beschrieben.

**Temperaturproctrammierte Reduktion mit Wasserstoff: Messbedingunpen**

Das Verfahren der temperaturprogrammierten Reduktion mit Wasserstoff ist vorstehend bereits beschrieben worden. Folgende Meßbedingungen wurden gewählt:

| | |
|---|---|
| Meßgerät: | Micromeritics Instrument Corp. Autochem II 2920 |
| Probengefäß: | U-Rohr-förmiger Glaswandreaktor |
| | Probenschenkel Durchmesser innen: 9,25 Millimeter |
| | Probenschenkel Durchmesser außen: 11,98 Millimeter |
| | Rohrlänge bis Beginn Konus: 165 Millimeter |
| | Länge des Konus: 19 Millimeter |
| | Konus Durchmesser außen: 6,1 Millimeter |
| | Gesamtlänge inkl. Bogen: 199 Millimeter |
| | Gegenschenkel Durchmesser außen: 6,1 Millimeter |
| | Gegenschenkel Durchmesser innen: 2,1 Millimeter |
| | Schenkelabstand mittig: 28 Millimeter |
| | Gesamtlänge des U-Rohrs: 199 Millimeter |
| Thermoelement: | Typ K Nickel-Chrom / Nickel-Aluminium |

(fortgesetzt)

| | |
|---|---|
| Temperaturbereich: | RT bis 1000°C |
| Heizrate: | 10 K/min |
| Meßgas: | 5 Vol.-% $H_2$ in Argon |
| Detektor: | Wärmeleitfähigkeitsdetektor WLD |
| Probenmenge: | entspricht 3 bis 8 Milligramm Kupfer berechnet als Metall |
| Probenvorbehandlung: | Trocknung im Trockenschrank bei 110°C |
| | Einwaage in heißem Zustand; |

### Untersuchung der BET-Oberfläche: Messbedinaunaen

Die Bestimmung der BET-Oberfläche bezeichnet ein Analyseverfahren zur Größenbestimmung von Oberflächen, insbesondere von porösen Festkörpern, mittels Gasadsorption. Es handelt sich um ein Methode der Oberflächenchemie, mit welcher die massenbezogene spezifische Oberfläche aus experimentellen Daten errechnet wird. "BET" steht dabei für die Nachnamen der Entwickler des BET-Modells, Stephen Brunauer, Paul Hugh Emmett und Edward Teller.

Die Bestimmung der spezifischen Oberfläche erfolgte mit den üblichen, dem Fachmann bekannten Verfahren. Vor der Messung wurden die Proben zur Entgasung für die Dauer von einer Stunde bei 400°C im Vakuum behandelt.

### Dynarnischer Aktivitätstest: Testbedinaunaen

Der dynamische Aktivitätstest wurde an Trägerkatalysatoren in einer Labormodellgasanlage vorgenommen. Dabei wurde die folgende Testgaszusammensetzung eingestellt:

| Gasmischung ⟍ Bestandteil | Gasmischung 1 | Gasmischung 2 | Gasmischung 3 |
|---|---|---|---|
| $O_2$ [Vol.-%]: | 10 | 10 | 10 |
| NO [Vppm]: | 500 | 500 | 0 |
| $NH_3$ [Vppm]: | 0 | 750 | 0 |
| CO [Vppm]: | 350 | 350 | 350 |
| $C_3H_6$ [Vppm]: | 100 | 100 | 100 |
| $H_2O$ [Vppm]: | 5 | 5 | 5 |
| $N_2$ [Vol.-%]: | Rest | Rest | Rest |
| Raumgeschwindigkeit [$h^{-1}$] | 60.000 | 60.000 | 60.000 |

Der Test wurde bei drei verschiedenen Temperaturen durchgeführt, die auf den anwendungsrelevantesten Zieltemperaturbereich für ein SCR-System, das in einer Abgasanlage anderen Abgasreinigungsaggregaten nachgeschaltet ist, abgestimmt waren, nämlich bei 175°C, 250°C und 300°C. Bei jeder Temperatur wurde ein Zyklus aus vier unterschiedlichen Phasen durchlaufen, die nachfolgend als Phasen A bis D bezeichnet werden:

Phase A:     Gasmischung 1; Dauer: 5 Minuten

Phase B,     $NH_3$-SCR-Phase:
             Gasmischung 2; Dauer: bis zu einem $NH_3$-Durchbruch von 20 Vppm oder Abbruch nach Zeit;

Phase C,     Gasmischung 3; Leeren des $NH_3$-Speichers durch Temperaturrampe bis 500°C:

(fortgesetzt)

Phase D,    Gasmischung 3; Einregeln der nächsten Meßtemperatur

Innerhalb eines Zyklusses wurde zuerst die Katalysatortemperatur auf die definierte Zieltemperatur eingeregelt. Dann wurde der Katalysator für 5 Minuten mit Gasmischung 1 beaufschlagt (Phase A). In Phase B wurde auf Gasmischung 2 umgeschaltet, um den NH₃-SCR-Umsatz zu ermitteln. Diese Phase wurde entweder bei Detektion eines $NH_3$-Durchbruchs von 20 Vppm abgebrochen oder durch ein zuvor festgelegtes Zeitkriterium beendet. Dann wurde Gasmischung 3 eingestellt und der Katalysator auf 500°C aufgeheizt, um den Ammoniakspeicher zu entleeren (Phasen C). Anschließend wurde der Katalysator auf die nächste zu untersuchende Messtemperatur heruntergekühlt (Phasen D), der nächste Zyklus begann mit Phase A durch Einstellen der Gasmischung 1 nach Einregeln der Zieltemperatur.

Der dynamische $NO_x$-Umsatz wurde für alle drei Messtemperaturen aus den während Phase B ermittelten Konzentrationen der entsprechenden Abgaskomponenten vor und nach Katalysator ermittelt. Hierzu wurde ein mittlerer $NO_x$-Umsatz über diese Phase unter Berücksichtigung der $N_2O$-Bildung wie folgt berechnet:

$$U_{mittel,N_2Okorr} = \left[ 1 - \frac{c_{NO_x,mittel}^{nach\,Kat} + 2 \cdot c_{N_2O,mittel}^{nach\,Kat}}{c_{NO_x,mittel}^{vor\,Kat} + 2 \cdot c_{N_2O,mittel}^{vor\,Kat}} \right] \cdot 100\%$$

**Beispiel 1:**

Es wurden pulverförmige Proben erfindungsgemäßer, mit Kupfer promotierter zeolithischer Katalysatoren hergestellt, die unter unterschiedlichen Bedingungen kalziniert wurden. Hierzu wurde kommerziell erhältliches Siliziumaluminiumphosphat SAPO-34 in Wasser suspendiert. Unter Rühren wurde Kupfer(II)-nitrat-Lösung zur Suspension hinzugegeben. Die zugegebene Menge der Kupfernitratlösung wurde so berechnet, daß das fertige pulverförmige Katalysatormaterial 3 Gew.-% Cu, bezogen auf das Gesamtgewicht der ausgetauschten zeolithähnlichen Verbindung, enthielt. Die Suspension wurde zur Vervollständigung des Ionenaustausches eine halbe Stunde lang gerührt und dann in der Brennkammer eines turbulenten Brenners in einen 625°C heißen Gasstrom einführt, wobei während einer Verweilzeit der Suspension im heißen Gasstrom von weniger als einer Minute das Lösungsmittel der Suspension verdampfte. Der erhaltene Feststoff wurde mit dem heißen Gasstrom durch ein sich anschließendes Resonanzrohr mit einer mittleren Temperatur von 622°C hindurchgeführt und dann in einem Abscheider von Gasstrom abgetrennt.

Das derart erhaltene Pulver wurde in vier Teilmengen aufgeteilt. Je eine der Teilmengen wurde in einem Ofen bei 640°C bzw. bei 780°C bzw. bei 850°C für die Dauer von 2 Stunden kalziniert. Insgesamt wurden somit vier Pulver erhalten:

Pulver I/---:    wie hergestellt; ohne Zusatzkalzination

Pulver I/640:    Zusatzkalzination bei 640°C

Pulver I/780:    Zusatzkalzination bei 780°C

Pulver I/850:    Zusatzkalzination bei 850°C.

Alle vier Pulver wurden in der temperaturprogrammierten Reduktion mit Wasserstoff nach dem oben angegebenen Verfahren untersucht. Zudem wurden die BET-Oberflächen der Pulver bestimmt und nach dem oben angegebenen Verfahren Katalysatoren zur Untersuchung der katalytischen Aktivität hergestellt.

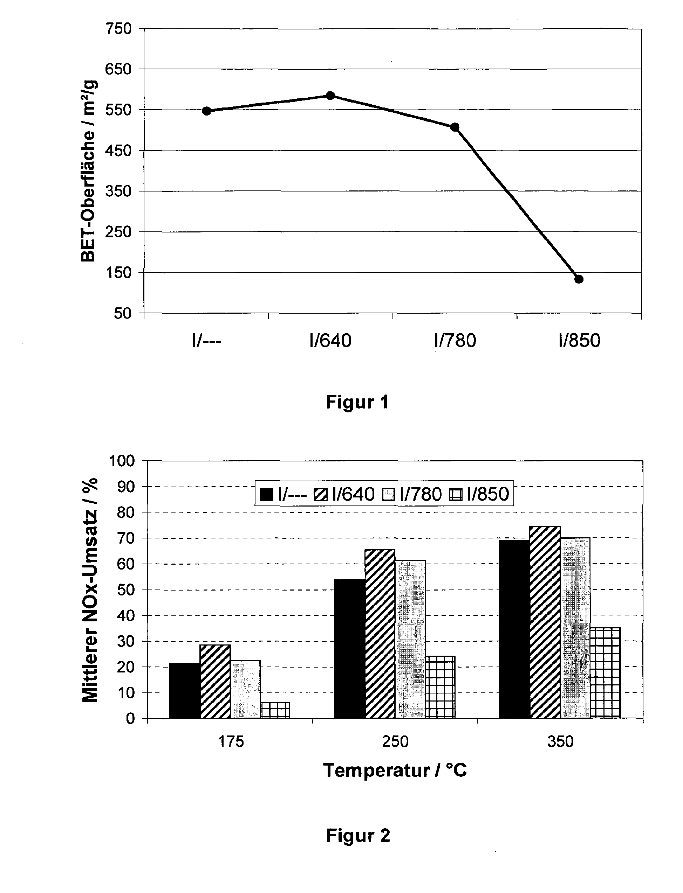

Der nachfolgenden Tabelle sind die gemessenen BET-Oberflächen der Pulver zu entnehmen. Die Ergebnisse sind auch in **Figur 1** graphisch dargestellt.

| Pulver: | I/--- | I/640 | I/780 | I/850 |
|---|---|---|---|---|
| BET in m²/g: | 547 | 585 | 507 | 133 |

Während die Kalzinationen bei 640°C und 780°C offenbar keinen signifikanten Einfluß auf die BET-Oberfläche haben, ist nach einer Kalzination bei 850°C ein deutlicher Einbruch der Oberfläche zu verzeichnen. Die Temperaturstabilität des nach dem vorstehenden Prozeß hergestellten Materials ist nicht ausreichend, um eine Kalzination bei 850°C unbeschadet zu überstehen.

Mit dem Zusammenbrechen der BET-Oberfläche nach einer Kalzination bei 850°C ist ein deutlicher Einbruch der katalytischen Aktivität zu erwarten, der auch tatsächlich beobachtet wird. **Figur 2** zeigt die Ergebnisse der Bestimmung der katalytischen Aktivität der aus den Pulvern gefertigten Katalysatoren. Erwartungsgemäß zeigt das bei 850°C kalzinierte Pulver 1/850 bei allen Temperaturen signifikant schlechtere Stickoxid-Umsätze in der SCR-Reaktion als das frisch hergestellte, nicht nachkalzinierte Pulver I/---.

Überraschenderweise wird für die bei 640°C und 780°C nachkalzinierten Pulver I/640 und 1/780 bei allen Temperaturen eine zum Teil sehr deutliche Verbesserung der katalytischen Aktivität in der SCR-Reaktion gegenüber dem frisch hergestellten, nicht nachbehandelten Pulver I/--- gefunden. Insbesondere bei einer Messtemperatur von 250°C bewirkt die Kalzination eine deutliche Verbesserung des $NO_x$-Umsatzes. Relativ verbessert sich der $NO_x$-Umsatz durch die Nachkalzination bei 640°C um 21,5 %, durch die Nachkalzination bei 780°C um 14 %.

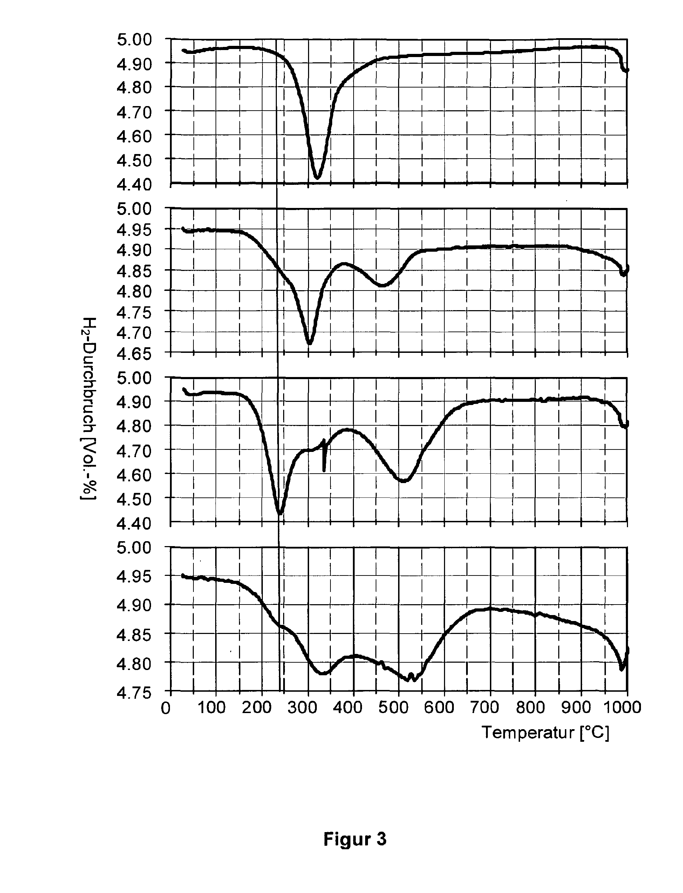

Die Nachkalzination der Katalysator bei 640°C bzw. 780°C bewirkt offensichtlich die Ausbildung besonders reduktionskatalytisch aktiver Spezies. Wie aus den TPR-Diagrammen in **Figur 3** hervorgeht, wird durch die Kalzination ein TPR-Peak bei 240°C erzeugt.

**Figur 3** zeigt (von oben nach unten) zunächst das TPR-Diagramm für das frisch hergestellte, nicht nachkalzinierte Pulver 1/--- und dann nachfolgend in dieser Reihenfolge die TPR-Diagramme der Pulver I/640, I/780 und I/850. Es ist deutlich zu erkennen, daß das frisch hergestellte, nicht nachkalzinierte Pulver kein TPR-Signal bei 240°C zeigt, welches jedoch im bei 780°C nachgetemperten Pulver I/780 charakteristisch ist. In der bei 640°C nachgetemperten Probe ist die beginnende Ausbildung der offenbar stark reduktionskatalytisch aktiven Spezies an einer entsprechenden Schulter bei 240°C zu erkennen, die von einem TPR-Signal bei 300°C bzw. 320°C überlagert wird. Das bei der höheren Temperatur liegende Signal zeigt offenbar weniger reduktionskatalytisch aktive Zentren an. Dieses Signal ist in der frisch hergestellten Probe alleinig vorhanden und sehr stark ausgeprägt. Es verschwindet in der bei 780°C kalzinierten Probe vollständig. Es ist zu erwarten, daß bei Pulverproben, die in einem Temperaturbereich zwischen 640°C und 780°C kalziniert werden, ein Doppelpeak zwischen 240°C und 320°C auftritt, der die Coexistenz beider reaktiver Spezies anzeigt. Das TPR-Diagramm der bei 850°C getemperten Probe zeigt durch die bei 240°C vorliegenden Schulter, daß noch Reste der hochaktiven Spezies vorhanden sind. Da jedoch die thermische Belastbarkeit des Materials in dieser Probe, wie bereits am Zusammenbruch der BET-Oberfläche zu erkennen war, überschritten wurde, ergibt sich durch die Versinterung des Materials ein insgesamt deutlich anderes Bild der reduktionskatalytischen Aktivität, das sich auch in der erheblich schlechteren katalytischen Aktivität des Materials in der SCR-Reaktion wiederspiegelt.

**Beispiel 2:**

Es wurden pulverförmige Proben erfindungsgemäßer, mit Kupfer promotierter zeolithischer Katalysatoren hergestellt, die unter unterschiedlichen Bedingungen kalziniert wurden. Hierzu wurde kommerziell erhältliches Siliziumaluminiumphosphat SAPO-34 in Wasser suspendiert. Unter Rühren wurde Kupfer(II)-nitrat-Lösung zur Suspension zugegeben. Die zugegebene Menge der Kupfernitratlösung wurde so berechnet, daß der fertige Katalysator 3 Gew.-% Cu, bezogen auf das Gesamtgewicht der ausgetauschten zeolithähnlichen Verbindung, enthielt. Die Suspension wurde zur Vervollständigung des lonenaustausches eine halbe Stunde lang gerührt und dann in der Brennkammer eines turbulenten Brenners in einen 500°C heißen Gasstrom einführt, wobei während einer Verweilzeit der Suspension im heißen Gasstrom von weniger als einer Minute das Lösungsmittel der Suspension verdampfte. Der erhaltene Feststoff wurde mit dem heißen Gasstrom durch ein sich anschließendes Resonanzrohr mit einer mittleren Temperatur von 505°C hindurchgeführt und dann in einem Abscheider von Gasstrom abgetrennt.

Das derart erhaltene Pulver wurde in vier Teilmengen aufgeteilt. Je eine der Teilmengen wurde in einem Ofen bei 640°C bzw. bei 780°C bzw. bei 850°C für die Dauer von 2 Stunden kalziniert. Insgesamt wurden somit vier Pulver erhalten:

| | |
|---|---|
| Pulver II/---: | wie hergestellt; ohne Zusatzkalzination |
| Pulver II/640: | Zusatzkalzination bei 640°C |
| Pulver II/780: | Zusatzkalzination bei 780°C |
| Pulver II/850: | Zusatzkalzination bei 850°C. |

Wie in Beispiel 1 wurden auch die hier erhaltenen vier Pulver in der temperaturprogrammierten Reduktion mit Wasserstoff nach dem bereits angegebenen Verfahren untersucht, die BET-Oberflächen der Pulver bestimmt, sowie Katalysatoren zur Untersuchung der katalytischen Aktivität hergestellt.

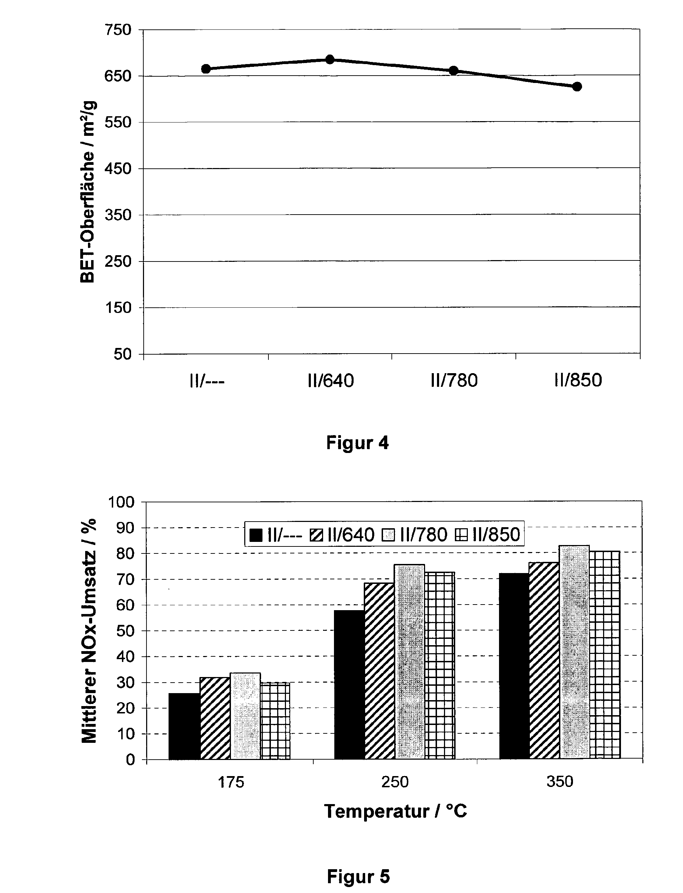

Der nachfolgenden Tabelle sind die gemessenen BET-Oberflächen der Pulver zu entnehmen. Die Ergebnisse sind auch in **Figur 4** graphisch dargestellt.

| Pulver: | II/--- | II/640 | II/780 | II/850 |
|---|---|---|---|---|
| BET in $m^2$/g: | 665 | 685 | 660 | 625 |

Es ist erkennbar, daß die BET-Oberfläche mit zunehmender Kalzinationstemperatur zwar erwartungsgemäß abnimmt, daß die thermische Belastbarkeit des Materials jedoch bei keiner der gewählten Temperaturen überschritten wird. Die hohe aktive Oberfläche von über 600 $m^2$/g bleibt also in allen untersuchten Pulverproben erhalten.

**Figur 5** zeigt die Ergebnisse der Bestimmung der katalytischen Aktivität der aus den Pulvern gefertigten Katalysatoren. Alle nachkalzinierten Pulver zeigen in allen Meßpunkten signifikante Verbesserungen der $NO_x$-Umsatzleistung gegenüber dem frisch hergestellten, nicht nachkalzinierten Pulver II/---. Relativ verbessert sich der $NO_x$-Umsatz bei 250°C durch die Nachkalzination bei 640°C um 18,3 %, durch die Nachkalzination bei 780°C um 30,8 % und durch die Nachkalzination bei 850°C um 25,6 %. Die bereits in Beispiel 1 gefundene überraschende Verbesserung der katalytischen Aktivität in der SCR-Reaktion wird somit bestätigt.

Auch die Ausbildung einer offenbar stark reduktionskatalytisch aktiven Spezies, die an einem TPR-Signal bei 240°C erkennbar ist, bestätigt sich in den TPR-Messungen an den in diesem Versuch hergestellten, erfindungsgemäßen Katalysatorpulver. **Figur 6** zeigt (von oben nach unten) die TPR-Diagramme der erfindungsgemäßen nachkalzinierten Pulver II/640, II/780 und II/850. Wie bereits bei den in Beispiel 1 erhaltenen TPR-Diagrammen ist eine bei der bei 640°C nachgetemperten Probe beginnende Ausbildung der offenbar stark reduktionskatalytisch aktiven Spezies an einer entsprechenden Schulter bei 240°C zu erkennen. Die bei 780°C und 850°C nachbehandelten Proben zeigen das entsprechende Signal in sehr ausgeprägter Form.

In Übereinstimmung mit der zunehmenden Stärke des TPR-Signals bei 240°C zeigen die Pulver II/780 und II/850, wie aus Figur 5 zu erkennen ist, die höchste katalytische Aktivität in allen untersuchten Temperaturpunkten.

**Beispiel 3:**

Im folgenden Beispiel wurde geprüft, ob der Zusammenhang zwischen der Verbesserung der katalytischen Aktivität der Katalysatoren durch gezielte thermische Behandlung unter oxidativen Bedingungen auch an praxisrelevanten Trägerkatalysatoren gefunden werden kann.

Zur Herstellung entsprechender Trägerkatalysatoren wurde zunächst eine Beschichtungssuspension durch Suspendieren von kommerziell erhältlichem SAPO-34 in Wasser und Zugabe einer wässrigen Kupfer(II)-nitratlösung hergestellt. Die zugegebene Menge der Kupfernitratlösung wurde so berechnet, daß der fertige Katalysator 2 Gew.-% Cu, bezogen auf das Gesamtgewicht der ausgetauschten zeolithähnlichen Verbindung, enthielt. Die Suspension wurde zur Vervollständigung des Ionenaustausches eine halbe Stunde lang gerührt und dann nach Zugabe von Silica-Sol als Binder direkt auf einen keramischen Durchflußwabenkörper mit 62 Zellen pro Quadratzentimeter und einer Zellwandstärke von 0,165 Millimetern, der einen Durchmesser von 92,96 Millimetern und eine Länge von 76,2 Millimetern aufwies, aufgebracht. Der so beschichtete Wabenkörper wurde bei 350°C im Heizgebläse getrocknet.

Dem so hergestellten Katalysator wurden vier Bohrkerne mit einem Durchmesser von 25,4 Millimetern entnommen. Ein erster Bohrkern wurde für die Dauer von 2 Stunden bei 570°C kalziniert, also unter Bedingungen, wie sie zumeist auch in der Praxis zur thermischen Vorbehandlung gewählt werden. Dieser Bohrkern III/--- wird als Maß für die katalytische Aktivität kommerziell erhältlicher Cu-SAPO-34-Katalysatoren zugrunde gelegt. Je einer der verbleibenden drei Bohrkerne wurde für die Dauer von 2 Stunden bei 640°C ($\rightarrow$ Bohrkern III/640) bzw. bei 780°C ($\rightarrow$ Bohrkern III/780) bzw. bei 850°C ($\rightarrow$ Bohrkern III/850) an Luft kalziniert.

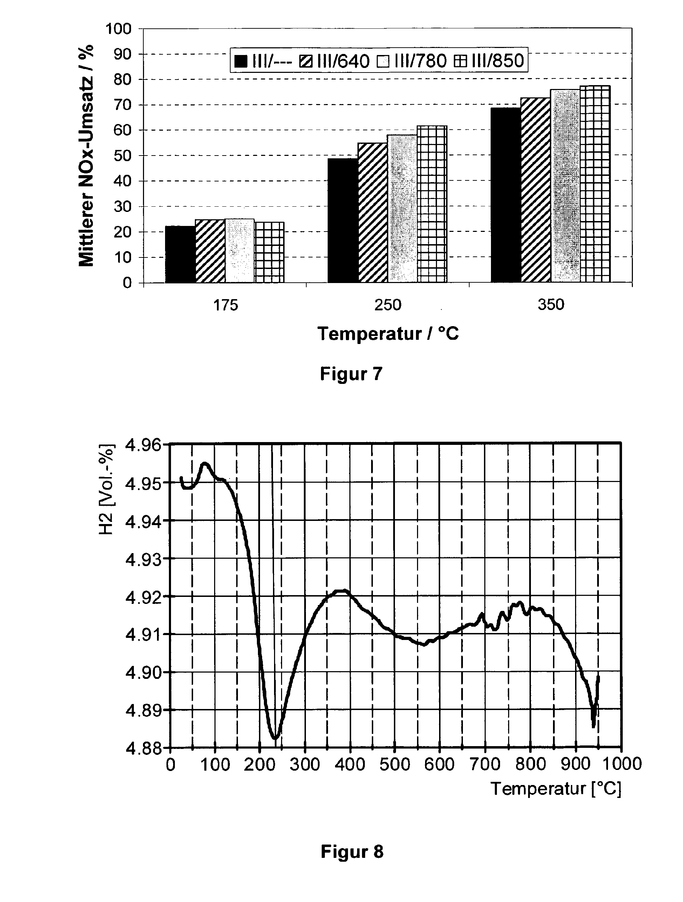

Die katalytisch Aktivität dieser vier Bohrkerne wurde nach dem bereits vorstehend beschriebenen Verfahren getestet. **Figur 7** zeigt das Ergebnis. Es ist eindeutig, daß die Verbesserung der katalytischen Aktivität bei allen nachkalzinierten Pulvern vorhanden ist.

**Beispiel 4:**

Zur Herstellung eines mit Kupfer promotierten, zeolithischen Katalysators wurde ein Chabazit (CHA) verwendet. Die Herstellung erfolgte nach dem erfindungsgemäßen Verfahren. Wie die in den Beispielen 1, 2 und 3 hergestellten Katalysatoren, zu deren Herstellung SAPO-34 verwendet wurde, wurde auch dieser Katalysator in der temperaturprogrammierten Reduktion mit Wasserstoff nach dem oben angegebenen Verfahren untersucht. Figur 8 zeigt das erhaltene TPR-Diagramm mit dem charakteristischen TPR-Peak bei 230°C.

**EP 2 465 606 A1**

**Patentansprüche**

1. Verfahren zur Verbesserung der katalytischen Aktivität eines mit Kupfer promotierten zeolithischen Katalysators umfassend die Behandlung eines Zeolithen und/oder einer zeolithähnlichen Verbindung mit einer Kupfersalzlösung und Kalzination des Zeolithen und/oder der zeolithähnlichen Verbindung unter oxidierenden Bedingungen, um den mit Kupfer promotierten zeolithischen Katalysator zu bilden, welcher in der temperaturprogrammierten Reduktion (TPR) mit Wasserstoff bei einer Heizrate von 10 K/min und einem Wasserstoffanteil im Testgas von 5 Vol.-% im Temperaturbereich von 230 bis 240°C ein Signal aufweist, wobei die Einwaage in der TPR so zu bemessen ist, daß die zu untersuchende Probe 3 bis 8 Milligramm Kupfer berechnet als Metall enthält.

2. Verfahren nach Anspruch 1, wobei der Zeolith bzw. die zeolithähnliche Verbindung ein Siliziumaluminiumphosphat mit Chabazitstruktur (SAPO-34) ist und nach Behandlung mit einer Kupfersalzlösung unter oxidierenden Bedingungen kalziniert wird, um den mit Kupfer promotierten zeolithischen Katalysator zu bilden, welcher in der temperaturprogrammierten Reduktion (TPR) mit Wasserstoff bei einer Heizrate von 10 K/min und einem Wasserstoffanteil im Testgas von 5 Vol.-% ein Signal bei 240°C aufweist, wobei die Einwaage in der TPR so zu bemessen ist, daß die zu untersuchende Probe 3 bis 8 Milligramm Kupfer berechnet als Metall enthält.

3. Verfahren nach Anspruch 1, wobei der Zeolith bzw. die zeolithähnliche Verbindung ein Chabazit (CHA) ist und nach Behandlung mit einer Kupfersalzlösung unter oxidierenden Bedingungen kalziniert wird, um den mit Kupfer promotierten zeolithischen Katalysator zu bilden, welcher in der temperaturprogrammierten Reduktion (TPR) mit Wasserstoff bei einer Heizrate von 10 K/min und einem Wasserstoffanteil im Testgas von 5 Vol.-% ein Signal bei 230°C aufweist, wobei die Einwaage in der TPR so zu bemessen ist, daß die zu untersuchende Probe 3 bis 8 Milligramm Kupfer berechnet als Metall enthält.

4. Verfahren nach einem der Ansprüche 1 bis 3,
wobei die Kupfersalzlösung eine Verbindung ausgewählt aus Kupfer(II)-sulfat, Kupfer(II)-nitrat, Kupfer(II)-acetat und Kupfer(II)-acetylacetonat in Wasser und/oder einem polaren Lösungsmittel ausgewählt aus der Gruppe bestehend aus Acetylaceton, kurzkettige Alkohole mit bis zu drei Kohlenstoffatomen, Acetonitril, Aceton, Dimethylsulfoxid (DMSO), Methylethylketon oder Mischungen davon enthält.

5. Verfahren nach einem der Ansprüche 1 bis 4, wobei die Kalzination unter oxidierenden Bedingungen in Luft bei einer Temperatur zwischen 600°C und 900°C erfolgt.

6. Verfahren nach einem der Ansprüche 1 bis 5, wobei die Kupferverbindung im resultierenden mit Kupfer ausgetauschten Zeolithen bzw. in der resultierenden mit Kupfer ausgetauschten zeolithähnlichen Verbindung in Mengen von zwischen 0,1 bis 20 Gew.-%, berechnet als Kupfer und bezogen auf die Gesamtmenge aus Kupfer und Zeolith bzw. zeolithähnlicher Verbindung, vorliegt.

7. Mit Kupfer promotierter zeolithischer Katalysator erhältlich gemäß einem der Ansprüche 1 bis 6.

8. Verfahren zur Reduktion von Stickoxiden in Abgasströmen umfassend das Inkontaktbringen des Abgasstromes mit einem Katalysator nach Anspruch 7.

**Figur 1**

**Figur 2**

**Figur 3**

**Figur 4**

**Figur 5**

**Figur 6**

**Figur 7**

**Figur 8**

Europäisches
Patentamt

European
Patent Office

Office européen
des brevets

**EUROPÄISCHER RECHERCHENBERICHT**

Nummer der Anmeldung

EP 10 01 5703

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| X | L. MARTINS ET AL.: "Cu and Co exchanged ZSM-5 zeolites - Activity towards no reduction and hydrocarbon oxidation", QUIM. NOVA, Bd. 29, Nr. 2, 2006, Seiten 223-229, XP002641780, * Zusammenfassung * * Seite 223, rechte Spalte, letzter Absatz - Seite 224, linke Spalte, Absatz 1st * * Seite 224, linke Spalte, Absatz 5th * * Seite 225, rechte Spalte, letzter Absatz * * Seite 226; Abbildung 4; Tabellen 3,4 * * Seite 227, rechte Spalte, letzter Absatz - Seite 228, rechte Spalte, Absatz 1st * * Abbildung 9 * ----- | 1,4-8 | INV. B01J29/85 B01J23/72 B01D53/94 |
| A | TORRE-ABREU C ET AL: "Characterization of CuMFI catalysts by temperature programmed", APPLIED CATALYSIS B: ENVIRONMENTAL, AMSTERDAM, NL, Bd. 12, 12. Juni 1997 (1997-06-12), Seiten 249-262, XP002094744, DOI: 10.1016/S0926-3373(96)00072-0 * Zusammenfassung * * Seite 250, letzter Absatz - Seite 251, Absatz 3rd * * Seite 253, Absatz 2nd - Seite 254, letzter Absatz * * Abbildungen 2,3 * * Tabellen 2,3 * ----- -/-- | 1-8 | RECHERCHIERTE SACHGEBIETE (IPC) B01J B01D |

Der vorliegende Recherchenbericht wurde für alle Patentansprüche erstellt

| Recherchenort | Abschlußdatum der Recherche | Prüfer |
|---|---|---|
| München | 14. Juni 2011 | Jourdan, Angelika |

Europäisches
Patentamt

European
Patent Office

Office européen
des brevets

**EUROPÄISCHER RECHERCHENBERICHT**

Nummer der Anmeldung

EP 10 01 5703

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | STANISLAW DZWIGAJ ET AL: "Incorporation of Copper in SiBEA Zeolite as Isolated Lattice Mononuclear Cu(II) Species and its Role in Selective Catalytic Reduction of NO by Ethanol", CATALYSIS LETTERS, Bd. 126, Nr. 1-2, 1. November 2008 (2008-11-01), Seiten 36-42, XP0055000589, ISSN: 1011-372X, DOI: 10.1007/s10562-008-9675-2 * Seite 36, rechte Spalte, letzter Absatz - Seite 37, linke Spalte, Absatz 1st * * Seite 37, linke Spalte, Absatz 6th * * Seite 40, linke Spalte, Absatz 1st * * Abbildungen 5,6 * ----- | 1-8 | |
| A | US 2009/087367 A1 (LIU XINSHENG [US] ET AL) 2. April 2009 (2009-04-02) * Beispiel 5 * * Abbildung 6 * * Absätze [0055] - [0056] * ----- | 1-7 | RECHERCHIERTE SACHGEBIETE (IPC) |
| A | MORENO TOST: "Selective catalytic reduction of nitric oxide by ammonia over Cu-exchanged Cuban natural zeolites", APPLIED CATALYSIS. B, ENVIRONMENTAL, Bd. 50, Nr. 4, 1. Januar 2004 (2004-01-01) , Seiten 279-288, XP0055000600, ISSN: 0926-3373 * Zusammenfassung * * Seite 280, rechte Spalte, letzte Zeile - Seite 281, rechte Spalte, Absatz 2nd * * Seite 285, linke Spalte, Absatz 1st * * Abbildung 7 * ----- -/-- | 1-8 | |

Der vorliegende Recherchenbericht wurde für alle Patentansprüche erstellt

| Recherchenort | Abschlußdatum der Recherche | Prüfer |
|---|---|---|
| München | 14. Juni 2011 | Jourdan, Angelika |

EPO FORM 1503 03.82 (P04C03)

Europäisches
Patentamt

European
Patent Office

Office européen
des brevets

# EUROPÄISCHER RECHERCHENBERICHT

Nummer der Anmeldung

EP 10 01 5703

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 6 221 324 B1 (COQ BERNARD [FR] ET AL) 24. April 2001 (2001-04-24) * Abbildungen 3,5,9 * * Zusammenfassung * * Spalte 2, Zeile 49 - Spalte 3, Zeile 16 * * Spalte 4, Zeile 62 - Spalte 5, Zeile 10 * * Spalte 5, Zeilen 38-54 * * Beispiele 1,3,7 * ----- | 1-8 | |
| A | TATSUMI ISHIHARA ET AL: "Copper Ion-Exchanged SAPO-34 as a Thermostable Catalyst for Selective Reduction of NO with C3H6", JOURNAL OF CATALYSIS, ACADEMIC PRESS, DULUTH, MN, US, Bd. 169, Nr. 1, 1. Juli 1997 (1997-07-01), Seiten 93-102, XP002603636, ISSN: 0021-9517, DOI: 10.1006/JCAT.1997.1681 [gefunden am 2002-04-15] * das ganze Dokument * ----- | 1-8 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 14. Juni 2011 | Jourdan, Angelika |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 10 01 5703

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-06-2011

| Im Recherchenbericht angeführtes Patentdokument | Datum der Veröffentlichung | Mitglied(er) der Patentfamilie | | Datum der Veröffentlichung |
|---|---|---|---|---|
| US 2009087367 A1 | 02-04-2009 | EP | 2237860 A1 | 13-10-2010 |
|  |  | JP | 2010540230 T | 24-12-2010 |
|  |  | WO | 2009045833 A1 | 09-04-2009 |
| US 6221324 B1 | 24-04-2001 | AT | 271420 T | 15-08-2004 |
|  |  | DE | 69825119 D1 | 26-08-2004 |
|  |  | DE | 69825119 T2 | 11-08-2005 |
|  |  | EP | 0914866 A1 | 12-05-1999 |
|  |  | ES | 2226084 T3 | 16-03-2005 |
|  |  | FR | 2770418 A1 | 07-05-1999 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- EP 0234441 A
- US 4874590 A
- WO 2005088091 A
- US 7220692 B